# FASCICULE DE BREVET EUROPEEN

(11) **EP 3 836 329 B1**
(45) Date de publication et mention de la délivrance du brevet: **08.03.2023**
(21) Numéro de dépôt: 20210186.1
(22) Date de dépôt: 27.11.2020
(51) Int. Cl.: H02H 3/20, G06F 1/26, H02H 3/00

(54) **PROTECTION CONTRE DES SURTENSIONS**
SCHUTZ GEGEN ÜBERSPANNUNGEN
SURGE PROTECTOR

(30) Priorité: 13.12.2019 FR 1914398
(43) Date de publication de la demande: 16.06.2021
(73) Titulaire: STMicroelectronics Inc., Coppell, TX 75019 (US); STMicroelectronics (Tours) SAS, 37100 Tours (FR)
(72) Inventeur: ROUVIERE, Mathieu, 37000 TOURS (FR); BLAUSER, Jeffrey, ROUND ROCK, TX 78681 (US); GRANGE, Karl, 37100 TOURS (FR); SAADNA, Mohamed, 37540 SAINT-CYR-SUR-LOIRE (FR)
(74) Mandataire: Cabinet Beaumont

(56) Documents cités:
- US-A1- 2008 258 688
- US-A1- 2014 146 426
- US-A1- 2014 211 351
- US-A1- 2018 335 454

## Description

### Domaine technique

La présente description concerne de façon générale les dispositifs de fourniture, à partir d'une source d'alimentation, d'une puissance d'alimentation à une charge. La demande concerne plus particulièrement une interface d'alimentation connectée entre une charge à alimenter et un connecteur de type USB-C, le connecteur étant destiné à être relié électriquement à une source d'alimentation, notamment par un câble de type USB-C.

### Technique antérieure

Bien qu'aujourd'hui le sans-fil soit un des axes majeurs de la recherche dans le domaine de l'échange d'énergie et de données, les câbles semblent toujours être le moyen le plus fiable pour connecter plusieurs appareils électroniques, que ce soit pour échanger des données ou pour alimenter ou recharger un ou plusieurs appareils électroniques. Les documents US 2014/021135 A1 et US 2014/0146426 A1 présentent des circuits électroniques pour la fourniture d'une alimentation.

Parmi les différents types de câbles et connecteurs de la norme USB, le type USB-C est l'un des types qui permet l'échange de données et d'énergie. La technologie USB-PD ou USB « Power Delivery » (fourniture de puissance), est une technologie qui s'adapte sur les câbles et connecteurs de type USB-C. Cette technologie permet la gestion de l'alimentation d'appareils électroniques. Le document US 2018/0335454 A1 présente un dispositif compatible avec la technologie USB-PD.

### Résumé de l'invention

Il serait souhaitable de pouvoir améliorer au moins en partie certains aspects des dispositifs de fourniture, à partir d'une source d'alimentation, d'une puissance d'alimentation à une charge par l'intermédiaire de connecteurs et d'un câble le cas échéant, notamment par l'intermédiaire de connecteurs USB-C adaptés à la technologie USB-PD, et, le cas échéant, d'un câble USB-C adapté à la technologie USB-PD.

En particulier, il serait souhaitable de pouvoir améliorer au moins certains aspects d'une interface d'alimentation connectée entre une charge à alimenter et un connecteur, par exemple de type USB-C, le connecteur étant destiné à être relié électriquement à une source d'alimentation, par exemple par un câble de type USB-C.

Un mode de réalisation pallie tout ou partie des inconvénients des dispositifs connus de fourniture, à partir d'une source d'alimentation, d'une puissance d'alimentation à une charge.

Un mode de réalisation pallie tout ou partie des inconvénients des interfaces d'alimentation connues connectées entre une charge à alimenter et un connecteur, par exemple de type USB-C, le connecteur étant destiné à être relié électriquement à une source d'alimentation, par exemple par un câble de type USB-C.

Un mode de réalisation prévoit une interface d'alimentation comprenant :
un premier interrupteur reliant une borne d'entrée de l'interface à une borne de sortie de l'interface ;
un pont diviseur de tension reliant la borne d'entrée à un noeud de référence configuré pour recevoir un potentiel de référence ;
un comparateur dont une première entrée est connectée à un premier noeud du pont diviseur et dont une deuxième entrée est configurée pour recevoir un potentiel constant ;
un convertisseur numérique analogique ;
un deuxième interrupteur reliant une sortie du convertisseur à un deuxième noeud du pont diviseur ; et
un premier circuit configuré pour commander le deuxième interrupteur et le convertisseur,
dans lequel une commande du premier interrupteur est déterminée par un signal de sortie du comparateur.

Selon un mode de réalisation, le pont diviseur comprend au moins une première résistance reliant la borne d'entrée au premier noeud, au moins une deuxième résistance reliant le premier noeud au deuxième noeud et au moins une troisième résistance reliant le deuxième noeud au noeud de référence.

Selon un mode de réalisation, la borne d'entrée est configurée pour recevoir un premier potentiel, la borne de sortie étant configurée pour recevoir un deuxième potentiel.

Selon un mode de réalisation, l'interface est destinée à recevoir le premier potentiel d'une source d'alimentation, et à fournir le deuxième potentiel à une charge.

Selon un mode de réalisation, le premier circuit est en outre configuré pour négocier une valeur de consigne du premier potentiel, et pour commander le convertisseur en fonction de la valeur de consigne négociée.

Selon un mode de réalisation, le premier circuit est configuré pour commander une fermeture du deuxième interrupteur après la négociation de ladite valeur de consigne.

Selon un mode de réalisation, l'interface comprend en outre un deuxième circuit configuré pour fournir un signal de commande du premier interrupteur à partir du signal de sortie du comaparateur.

Selon un mode de réalisation, l'interface comprend en outre un troisième circuit dont une première borne est reliée à la borne d'entrée par le premier interrupteur, et dont une deuxième borne est reliée à la borne de sortie, le troisième circuit étant configuré pour fournir, à la deuxième borne, un potentiel de la première borne dans un premier mode de fonctionnement ou un troisième potentiel dans un deuxième mode de fonctionnement.

Selon un mode de réalisation, le premier circuit est configuré pour sélectionner un mode de fonctionnement parmi les premier et deuxième modes de fonctionnement.

Selon un mode de réalisation, le troisième circuit comprend un convertisseur de puissance configuré pour fournir le troisième potentiel à partir du potentiel de la première borne.

Selon un mode de réalisation, le premier interrupteur est un transistor MOS.

Selon un mode de réalisation, le deuxième interrupteur est configuré pour être ouvert en l'absence de commande du premier circuit.

Selon un mode de réalisation, le deuxième interrupteur est un transistor MOS, de préférence normalement bloqué.

Selon un mode de réalisation, le premier circuit comprend, de préférence est constitué par, un microcontrôleur.

Un autre mode de réalisation prévoit un procédé d'alimentation d'une charge à partir d'une source d'alimentation comprenant les étapes suivantes :
recevoir un premier potentiel de la source ;
détecter avec un comparateur que le premier potentiel est inférieur à un seuil et conditionner une fermeture d'un premier interrupteur reliant la source à la charge à ladite détection ; et
négocier, avec la source, une valeur de consigne du premier potentiel,
dans lequel le seuil est fixe dans un premier mode de fonctionnement, et est déterminé par la valeur de consigne négociée dans un deuxième mode de fonctionnement, le procédé étant de préférence mis en oeuvre par une interface d'alimentation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue schématique illustrant une connexion entre un dispositif électronique comprenant une source d'alimentation et un dispositif électronique comprenant une charge à alimenter ;
la figure 2 représente, de manière plus détaillée, un mode de réalisation d'une partie du dispositif électronique de la figure 1 qui comprend la charge à alimenter ; et
la figure 3 illustre par des courbes le fonctionnement de la partie du dispositif électronique de la figure 2, selon un exemple de mode de mise en oeuvre.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la gestion d'une phase de négociation concernant la puissance d'alimentation à fournir à une charge à partir d'une source d'alimentation n'est pas détaillée. De plus, seuls les aspects pertinents des technologies USB-C et USB-PD sont décrits, les autres aspects s'adaptant sans modifications. Notamment, la fonction d'échange de données via des connecteurs, et le cas échéant un câble de type USB-C, de préférence adaptés à la technologie USB-PD, n'est pas décrite, les modes de réalisation décrits étant compatibles avec la fonction d'échange de données usuelle des technologies USB-C et USB-PD.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

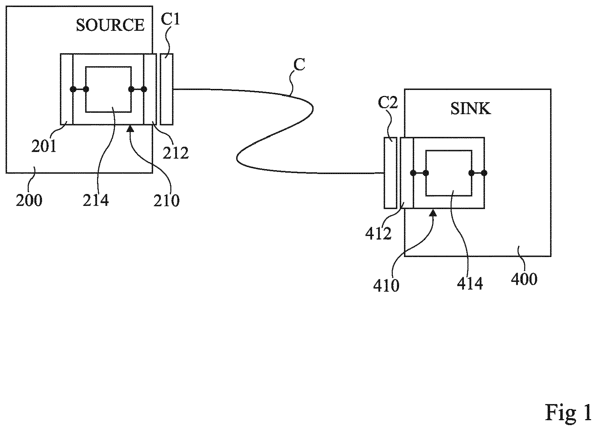

La figure 1 est une vue schématique illustrant une transmission d'énergie entre un dispositif électronique 200 ayant le rôle d'une source de puissance (SOURCE) et un dispositif électronique à alimenter 400 ayant le rôle d'une charge (SINK). Dans cet exemple, les dispositifs 200 et 400 sont connectés par l'intermédiaire d'un câble C de type USB-C, dans cet exemple adapté à la technologie USB-PD. Dans un autre exemple non illustré, les dispositifs 200 et 400 sont directement connectés l'un à l'autre, sans câble C.

Le dispositif 200 comprend une source d'alimentation électrique 201. La source d'alimentation 201 est par exemple une alimentation continue (DC), par exemple obtenue à partir d'une source d'alimentation alternative telle que le secteur. Dans la suite de la description, on considère que le dispositif 200 comprend une source 201 d'alimentation continue, le dispositif 200 étant par exemple un ordinateur, une batterie portable, etc. ou tout autre dispositif électronique adapté à alimenter un dispositif et/ou à recharger une batterie.

Le câble C comprend, à chacune de ses extrémités, un connecteur C1, C2 de type USB-C, dans cet exemple adapté à la technologie USB-PD. Les connecteurs C1, C2 sont généralement identiques.

Un élément de raccordement 210, respectivement 410, comprenant une interface de connexion 214, respectivement 414, et un connecteur 212, respectivement 412, est disposé du côté du dispositif 200, respectivement du dispositif 400. L'interface 214, respectivement 414, relie la source 201, respectivement la charge à alimenter (non illustrée) du dispositif 400, au connecteur 212, respectivement 412. De préférence, on considère que les éléments de raccordement 210, respectivement 410, font partie du dispositif 200, respectivement 400. Chaque connecteur 212, 412 est configuré pour coopérer avec un connecteur C1, C2 du câble C. Les interfaces 214, 414 sont généralement identiques. Les interfaces de connexion 214, 414 permettent d'adapter la puissance d'alimentation fournie par la source d'alimentation 201 en fonction de la puissance d'alimentation demandée par la charge du dispositif 400. Plus particulièrement, dans la suite de la description, les interfaces de connexion 214, 414 permettent d'adapter la puissance d'alimentation fournie par la source d'alimentation 201 en fonction d'une puissance d'alimentation de consigne demandée par le dispositif 400, notamment dans le cas où la technologie USB-PD est mise en oeuvre. En particulier, l'interface 214 du côté de la source d'alimentation 201 comprend généralement un convertisseur de puissance (non représenté) configuré pour fournir, à partir de la puissance d'alimentation délivrée par la source 201, la puissance d'alimentation que le dispositif 200 fournit au dispositif 400. De manière similaire, l'interface 414 du côté de la charge à alimenter comprend généralement un convertisseur de puissance (non représenté), par exemple configuré pour générer, à partir de la puissance d'alimentation reçue par le dispositif 400, une puissance d'alimentation qui est effectivement fournie à la charge à alimenter du dispositif 400.

Lors d'une connexion gérée par la technologie USB-PD, une puissance d'alimentation initiale, généralement de valeur prédéfinie par exemple égale à 2,5 W, est fournie par l'interface 214 du dispositif 200 à l'interface 414 du dispositif 400. Une fois l'interface 414 alimentée par cette puissance d'alimentation initiale, une communication s'établit entre les dispositifs 200 et 400, via leurs interfaces 214 et 414, pour décider de la puissance électrique d'alimentation nécessaire au dispositif 400 pour pouvoir être alimenté et/ou rechargé. Par exemple, le dispositif 400 indique, via son interface 414, la puissance minimale requise pour son fonctionnement et le dispositif 200 indique, par exemple via son interface 214, les puissances d'alimentation qu'il est capable de fournir. Une négociation, dans cet exemple gérée par la technologie USB-PD, s'entame alors pour définir quelle puissance le dispositif 200 fournira au dispositif 400. Une fois cette négociation terminée, l'interface de connexion 214 adapte la puissance d'alimentation de la source d'alimentation 201 conformément au résultat de la négociation, puis l'alimentation du dispositif 400 débute.

A titre d'exemple, la puissance d'alimentation négociée est sélectionnée dans une liste de puissances d'alimentation prédéfinies. Cette liste est par exemple enregistrée dans l'interface 214. De préférence, cette liste est définie par une norme. Chaque puissance d'alimentation prédéfinie est caractérisée par plusieurs valeurs, notamment par une valeur prédéfinie de la tension et, le cas échéant, par une valeur maximale prédéfinie du courant correspondant à cette puissance prédéfinie. Dans la technologie USB-PD, chaque ensemble de valeurs caractérisant une puissance d'alimentation prédéfinie de la liste correspond à un ensemble d'informations désigné par le sigle PDO (« Power Data Object » - objet de données de puissance). Ces ensembles d'informations PDO peuvent être transmis entre des dispositifs 200 et 400 adaptés à la technologie USB-PD pour définir, lors d'une négociation, laquelle des puissances prédéfinies le dispositif 200 doit délivrer à la charge 400. Dans cet exemple, la puissance d'alimentation négociée reçue par l'interface 414 du dispositif 400 peut ne pas être adaptée à la charge à alimenter du dispositif 400, et le convertisseur de puissance de l'interface 414 peut alors être utilisé pour fournir une puissance d'alimentation adaptée à la charge du dispositif 400, à partir de la puissance d'alimentation négociée reçue par le dispositif 400.

A titre d'exemple, une fois qu'une puissance d'alimentation a été négociée, la tension d'alimentation fournie par le dispositif 200 à l'interface 414 du dispositif 400 peut être asservie par la charge du dispositif 400 pour correspondre à une tension d'alimentation requise par une charge du dispositif 400, typiquement une batterie à recharger. Ce mode de fonctionnement est dit à puissance d'alimentation programmable (« Programmable Power Supply »), ou mode PPS. Dans ce cas, l'interface 414 est, selon un mode de réalisation, configurée pour fournir directement à la charge du dispositif 400 la puissance d'alimentation qu'elle reçoit du dispositif 200, et en particulier la tension d'alimentation qu'elle reçoit du dispositif 200.

Lorsque les dispositifs 200 et 400 sont connectés et que le dispositif 200 fournit une puissance d'alimentation au dispositif 400, il est souhaitable que la tension d'alimentation qui est fournie à l'interface 414 par le dispositif 200 ne présente pas de surtension. En effet, de telles surtensions sont susceptibles d'entraîner des disfonctionnements du dispositif 400, voire d'endommager le dispositif 400, notamment de son interface 414 ou de sa charge à alimenter. En particulier, lorsque la charge à alimenter est une batterie à recharger et que le système fonctionne en mode PPS, les éventuelles surtensions sur la tension d'alimentation reçue par l'interface 414 sont transmises directement à la charge à alimenter du dispositif 400, ce qui peut entraîner des disfonctionnements, voire une destruction, de la charge du dispositif 400.

Les inventeurs proposent ici une interface d'alimentation 414, dans laquelle, lors d'une connexion entre les dispositifs 200 et 400, tant que le dispositif 400 reçoit une puissance d'alimentation initiale prédéfinie, ou, autrement dit, tant qu'une puissance d'alimentation n'a pas été négociée, la tension d'alimentation reçue par l'interface 414 est comparée à un seuil fixe prédéfini de manière à détecter une surtension. En outre, une fois qu'une puissance d'alimentation de consigne, et plus particulièrement une tension d'alimentation de consigne, a été négociée, l'interface est configurée pour comparer la tension d'alimentation reçue à un seuil déterminé par la tension d'alimentation de consigne négociée, de manière à détecter une surtension. Les inventeurs proposent plus particulièrement une interface 414 dans laquelle des mêmes éléments et/ou circuits et/ou composants de l'interface 414 sont utilisés pour comparer la tension d'alimentation reçue au seuil fixe dans une première phase de fonctionnement, et au seuil variable déterminé par une tension de consigne négociée dans une deuxième phase de fonctionnement.

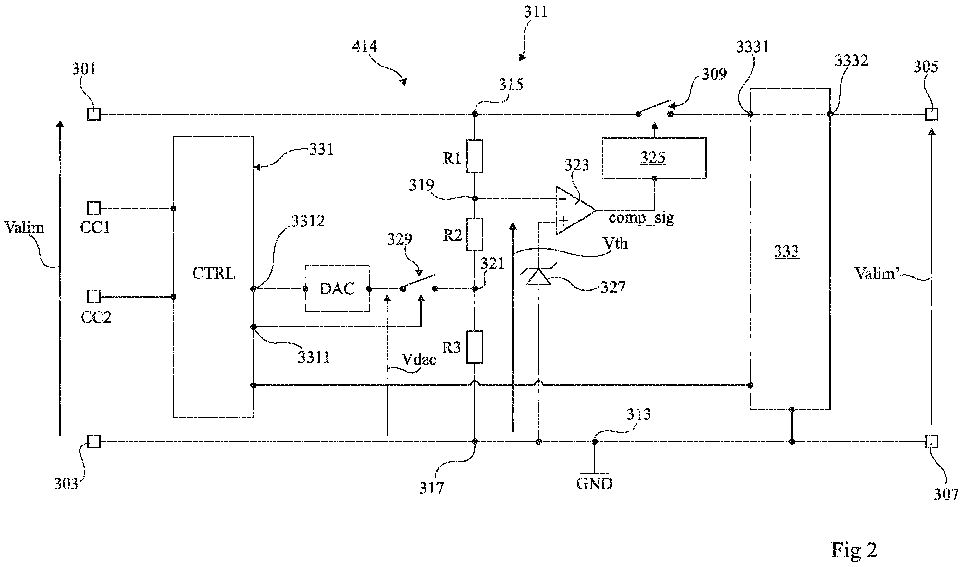

La figure 2 représente, de manière plus détaillée, un mode de réalisation de l'interface 414 du dispositif 400 de la figure 1. De préférence, l'interface 414 est de type USB-C, par exemple adaptée à la technologie USB-PD, l'interface 214 pouvant être identique à l'interface 414.

L'interface 414 comprend deux bornes d'entrée 301 et 303. La borne 301 est configurée pour recevoir un potentiel d'alimentation continu (DC), par exemple positif, la borne 303 étant destinée à recevoir un potentiel de référence, par exemple un potentiel de masse GND. Dit autrement, l'interface 414 est configurée pour recevoir une tension d'alimentation continue Valim, par exemple positive, entre les bornes 301 et 303.

L'interface 414 comprend deux bornes de sortie 305 et 307. La borne 305 est configurée pour fournir un potentiel d'alimentation continu Valim' à une charge du dispositif 400, la borne 307 fournissant le potentiel de référence GND et étant par exemple connectée à la borne 303. Dit autrement, l'interface 414 est configurée pour fournir, à partir de la tension Valim, une tension d'alimentation continue Valim', par exemple positive, entre les bornes 305 et 307.

L'interface 414 comprend en outre, du coté de ses bornes d'entrée 301 et 303, au moins une borne de communication. Les bornes d'entrée 301 et 303 et de communication sont toutes destinées à être reliées au connecteur 412 correspondant (non représenté), ce qui permet ensuite la liaison avec le dispositif 200, par exemple via le connecteur C2, le câble C le cas échéant et le connecteur C1 comme cela a été représenté en figure 1.

Selon un mode de réalisation, l'interface 414 comprend deux bornes de communication CC1, CC2 comme cela est représenté en figure 2. Un avantage d'avoir deux bornes de communication est que, dans le cas où ces bornes sont positionnées de façon symétrique sur le connecteur 412, cela permet de fabriquer un connecteur C2 réversible, c'est-à-dire un connecteur C2, par exemple de forme rectangulaire, que l'on peut coupler au connecteur 412 dans un premier sens et dans un deuxième sens inverse au premier.

L'interface 414 comprend un interrupteur 309, par exemple un transistor MOS (« Metal Oxide Semiconductor » - métal oxyde semiconducteur), par exemple un transistor MOS à canal N. De préférence, l'interrupteur 309 est configuré pour être par défaut, c'est-à-dire en l'absence de commande, à l'état ouvert, l'interrupteur 309 étant alors par exemple mis en oeuvre au moyen d'un transistor MOS normalement bloqué (« normally OFF » en anglais).

L'interrupteur 309 relie la borne d'entrée 301 à la borne de sortie 305. Par exemple, une première borne de conduction de l'interrupteur 309 est reliée, de préférence connectée, à la borne 301, une deuxième borne de conduction de l'interrupteur 309 étant reliée à la borne 305. Par borne de conduction d'un interrupteur, on entend ici l'une des deux bornes d'un interrupteur entre lesquelles circule un courant quand l'interrupteur est fermé, et entre lesquelles l'interrupteur se comporte comme un circuit ouvert quand l'interrupteur est ouvert.

L'interface 414 comporte en outre un pont diviseur résistif 311. Le pont diviseur 311 relie la borne 301 à la borne 303. Autrement dit, le pont diviseur 311 relie la borne d'entrée 301 à un noeud 313 configuré pour recevoir le potentiel de référence GND, ce noeud 313 étant relié, de préférence connecté, à la borne 303. Par exemple, le pont diviseur 311 comprend une extrémité 315 reliée, de préférence connectée, à la borne 301, et une autre extrémité 317 reliée, de préférence connectée, au noeud 313.

Le pont diviseur 311 comprend deux noeuds 319 et 321.

Selon un mode de réalisation, le pont diviseur 311 comprend au moins une résistance R1 reliant l'extrémité 315 du pont 311 au noeud 319, au moins une résistance R2 reliant le noeud 319 au noeud 321, et au moins une résistance R3 reliant le noeud 321 à l'extrémité 317 du pont 311. A titre d'exemple, le pont diviseur 311 comprend une résistance R1 dont une borne est reliée, de préférence connectée, à l'extrémité 315 du pont 311 et dont l'autre borne est reliée, de préférence connectée, au noeud 319, une résistance R2 dont une borne est reliée, de préférence connectée, au noeud 319 et dont l'autre borne est reliée, de préférence connectée au noeud 321, et une résistance R3 dont une borne est reliée, de préférence connectée, au noeud 321 et dont l'autre borne est reliée, de préférence connectée, à l'extrémité 317 du pont 311.

L'interface 414 comprend un comparateur 323. L'interrupteur 309 est commandé à partir d'un signal de sortie comp_sig du comparateur 323.

Selon un mode de réalisation, l'interface 414 comprend un circuit 325 de commande rapprochée (« driver circuit » en anglais), configuré pour fournir, à partir du signal comp_sig, un signal de commande correspondant à une borne de commande de l'interrupteur 309, par exemple une grille d'un transistor MOS mettant en oeuvre l'interrupteur 309.

Une première entrée du comparateur 323, dans cet exemple l'entrée inverseuse (-) du comparateur 323, est connectée au noeud 319 du pont diviseur 311. La première entrée du comparateur 323 est configurée pour recevoir le potentiel du noeud 319 du pont diviseur 311. Une deuxième entrée du comparateur 323, dans cet exemple l'entrée non inverseuse (+), est configurée pour recevoir un potentiel Vth constant ou fixe, par exemple référencé à la masse GND.

Selon un mode de réalisation, l'interface 414 comprend une diode 327, par exemple une diode Zener, de préférence une diode Zener à saut de bande (« band gap » en anglais »), reliant la deuxième entrée du comparateur 323 au noeud 313. La diode 327 est configurée pour fournir le potentiel constant Vth à la deuxième entrée du comparateur 323, ce potentiel Vth étant de préférence constant malgré d'éventuelles variations de température dans l'interface 414. A titre d'exemple, la diode 327 a une première électrode, de préférence son anode, reliée, de préférence connectée, au noeud 313, et une deuxième électrode, de préférence sa cathode, reliée, de préférence connectée, à la deuxième entrée du comparateur 323. En variante, le potentiel Vth est fourni à la deuxième entrée du comparateur 323 par un circuit autre qu'une diode 327.

L'interface 414 comprend un convertisseur numérique analogique DAC et un interrupteur 329, de préférence un interrupteur 329 configuré pour être par défaut à l'état ouvert. L'interrupteur 329 relie une sortie du convertisseur DAC au noeud 321 du pont diviseur 311. Par exemple, une borne de conduction de l'interrupteur 329 est reliée, de préférence connectée, à la sortie du convertisseur DAC, une autre borne de conduction de l'interrupteur 329 étant reliée, de préférence connectée, au noeud 321. Ainsi, lorsque l'interrupteur 329 est fermé, le potentiel du noeud 321 est imposé par un potentiel Vdac disponible sur la sortie du convertisseur DAC, et, lorsque l'interrupteur 329 est ouvert, le potentiel du noeud 321 est imposé par la valeur du potentiel Valim sur la borne 301 et les valeurs des résistances R1, R2 et R3 du pont diviseur 311.

Selon un mode de réalisation, l'interrupteur 329 est un transistor MOS, par exemple à canal N, de préférence un transistor MOS normalement bloqué.

L'interface 414 comprend un circuit 331 (bloc « CTRL ») configuré pour commander l'interrupteur 329. Le circuit de commande 331 comprend une sortie 3311 reliée, de préférence connectée, à une borne de commande de l'interrupteur 329, par exemple une grille d'un transistor mettant en oeuvre l'interrupteur 329.

Le circuit de commande 331 est en outre configuré pour commander le convertisseur DAC, c'est-à-dire pour fournir un signal numérique de commande, par exemple sur plusieurs bits, à une entrée du convertisseur DAC, la valeur du signal numérique de commande déterminant la valeur du potentiel Vdac fourni par la sortie du convertisseur DAC. Dans l'exemple représenté, le convertisseur DAC est externe au circuit 331, et le circuit 331 comprend une sortie 3312 configurée pour fournir le signal de commande du convertisseur DAC, la sortie 3312 étant reliée, de préférence connectée, à l'entrée du convertisseur DAC. Dans un autre exemple non représenté, le convertisseur DAC fait partie du circuit 331.

Selon un mode de réalisation, le circuit 331 comprend ou est constitué par un microcontrôleur. De préférence, le convertisseur DAC est alors un composant interne du microcontrôleur.

Selon un mode de réalisation, le circuit 331 est configuré pour mettre en oeuvre diverses fonctions de l'interface 414.

Plus particulièrement, selon un mode de réalisation, le circuit 331 est configuré pour mettre en oeuvre les fonctions d'échange de données avec le dispositif 200 (figure 1), et comprend, dans cet exemple, deux bornes reliées respectivement aux deux bornes CC1 et CC2.

En outre, selon un mode de réalisation, le circuit 331 est configuré pour mettre en oeuvre, par exemple conjointement avec l'interface 214 du dispositif 200 (figure 1), la phase de négociation d'une puissance d'alimentation de consigne que le dispositif 200 fournira au dispositif 400.

De préférence, l'interface 414 comprend un circuit 333 reliant l'interrupteur 309 à la borne 305 de l'interface 414. Par exemple, le circuit 333 comprend une première borne 3331 reliée, de préférence connectée, à l'interrupteur 309, et plus particulièrement à la borne de conduction de l'interrupteur 309 qui est du côté de la borne 305 de l'interface 414, le circuit 333 comprenant une deuxième borne 3332 reliée, de préférence connectée, à la borne 305.

Le circuit 333 est configuré pour recevoir, par exemple sur sa borne 3331, un premier potentiel, par exemple le potentiel Valim, et pour fournir, par exemple sur sa borne 3332, un deuxième potentiel, par exemple le potentiel Valim'. Le circuit 333 est par exemple relié, de préférence connecté, au noeud 313 de référence.

Selon un mode de réalisation, dans un premier mode de fonctionnement où la tension d'alimentation Valim est égale à la tension d'alimentation négociée entre les dispositifs 200 et 400 (figure 1) mais a une valeur qui n'est pas adaptée à la charge du dispositif 400, le circuit 333 est configuré pour adapter la valeur du deuxième potentiel Valim' à la charge. Pour cela, le circuit 333 comprend par exemple un convertisseur de puissance (non illustré). Ce premier mode de fonctionnement est par exemple mis en oeuvre quand la puissance d'alimentation négociée est choisie dans la liste prédéfinie de puissance d'alimentation, et que la puissance d'alimentation négociée correspond à une valeur de consigne du potentiel Valim qui n'est pas adaptée à la charge du dispositif 400. Dans un deuxième mode de fonctionnement, par exemple le mode PPS, le circuit 333 est configuré pour fournir le deuxième potentiel à une valeur égale à celle du premier potentiel qu'il reçoit, par exemple en connectant sa borne 3331 à sa borne 3332 comme cela est illustré par des traits en pointillé en figure 2.

A titre d'exemple, le circuit 331 est configuré pour commander le circuit 333, par exemple pour fournir au circuit 333 un signal commandant la sélection du mode de fonctionnement du circuit 333 parmi les premier et deuxième modes de fonctionnement décrits ci-dessus.

Le fonctionnement de l'interface 414 est le suivant.

Lors d'une connexion du dispositif 200 au dispositif 400, via les connecteurs 212 et C1, le câble C le cas échéant, et les connecteurs C2 et 412 (figure 1), le dispositif 200 fournit une puissance d'alimentation initiale, par exemple une tension Valim de valeur initiale égale à 5,5 V, par exemple pour une puissance d'alimentation initiale égale à 2,5 W.

Les interrupteurs 309 et 329 sont par défaut ouverts. Ainsi, même si le potentiel Valim a une valeur éloignée de la valeur initiale qu'il devrait avoir, la puissance initiale reçue par le dispositif 400 (figure 1) n'est pas transmise à sa charge.

Le potentiel Valim reçu est comparé à un seuil haut fixe (constant), par exemple égal à 5,9 V. Ce seuil fixe est déterminé par la valeur du potentiel Vth et des résistances du pont diviseur 311. En effet, le potentiel du noeud 319 est alors représentatif de la valeur du potentiel Valim, et le comparateur 323 compare alors le potentiel du noeud 319 au potentiel Vth. Plus particulièrement, dans cet exemple, le potentiel du noeud 319 est égal à (Valim*(R2+R3))/(R1+R2+R3) et est comparé au potentiel Vth fixe. Dit autrement, le potentiel Valim est comparé à un seuil égal à ((R1+R2+R3)*Vth)/(R2+R3).

Si le potentiel Valim est inférieur à ce seuil haut, cela signifie que le potentiel Valim ne présente pas de surtension et l'interrupteur 309 est commuté à l'état fermé. Par exemple, l'interrupteur 309, et lorsqu'il est présent le circuit 325, sont configurés pour que l'interrupteur soit fermé, respectivement ouvert, quand le signal comp_sig est dans un premier état binaire, par exemple l'état haut, respectivement dans un deuxième état binaire, par exemple l'état bas. Le comparateur 323 est alors configuré pour que le signal comp_sig soit dans le premier état binaire, respectivement le deuxième état binaire, quand le potentiel Valim est inférieur au seuil haut, respectivement supérieur au seuil haut, c'est-à-dire dans cet exemple quand le potentiel du noeud 319 est inférieur, respectivement supérieur, au potentiel fixe Vth.

La fermeture de l'interrupteur 309 entraîne que la borne 301 est alors reliée à la borne 305, de préférence par l'intermédiaire du circuit 333.

Une fois l'interrupteur 309 fermé, l'interface met en oeuvre une phase de négociation d'une puissance d'alimentation de consigne, donc d'une valeur de consigne du potentiel Valim. A titre d'exemple, la réception par l'interface 414 de la puissance d'alimentation initiale permet l'alimentation du circuit 331 qui met alors en oeuvre cette phase de négociation.

En outre, à partir de l'instant où l'interrupteur 309 est commuté à l'état fermé, toute surtension sur le potentiel Valim entraînant que le potentiel Valim dépasse le seuil haut fixe est détectée par une commutation du signal comp_sig qui provoque l'ouverture de l'interrupteur 309. Cela permet de protéger de cette surtension les composants du dispositif 400 (figure 1) connectés aux bornes 305 et 307 de l'interface 414.

Une fois la négociation de puissance d'alimentation terminée entre les dispositifs 200 et 400, ou dit autrement une fois qu'une valeur de consigne du potentiel Valim est déterminée par les dispositifs 200 et 400, le dispositif 200 adapte la valeur du potentiel Valim à la valeur de consigne négociée.

En outre, le seuil haut auquel est comparé le potentiel Valim pour détecter une éventuelle surtension est mis à jour, la valeur du seuil haut étant alors déterminée par la valeur de consigne du potentiel Valim. En effet, la valeur négociée de consigne du potentiel Valim peut être supérieure à celle du seuil fixe auquel est comparé le potentiel Valim pendant la première phase de fonctionnement où l'interface 414 reçoit la puissance initiale d'alimentation et négocie une puissance d'alimentation. Il en résulterait que, en l'absence de modification du seuil haut conformément à la valeur négociée de consigne du potentiel Valim, le signal comp_sig commuterait alors à l'état binaire indiquant que le potentiel Valim est supérieur au seuil haut fixe, ce qui provoquerait l'ouverture de l'interrupteur 309 et stopperait l'alimentation de la charge du dispositif 400.

La mise à jour du seuil haut est mise en oeuvre, en fermant l'interrupteur 329, d'où il résulte que le potentiel Vdac est forcé, ou appliqué, sur le noeud 321 du pont diviseur 311, la valeur du potentiel Vdac étant déterminée par la valeur négociée de consigne du potentiel Valim. Il en résulte que le potentiel du noeud 319 reçu par la première entrée du comparateur 323 est ensuite égale à ((Valim-Vdac)*R2)/(R1+R2)+Vdac. Dit autrement, le seuil haut auquel est comparé le potentiel Valim est alors égal à ((Vth* (R1+R2)-R1*Vdac)/R2 et est bien déterminé par la valeur du potentiel Vdac, ou, dit autrement, variable en fonction de la valeur du potentiel Vdac. La valeur du potentiel Vdac est déterminée par le signal numérique de commande reçu par l'entrée du convertisseur DAC, ou, dit autrement, est déterminée par le circuit 331, la valeur du signal numérique de commande du convertisseur DAC étant déterminée par le circuit 331 à partir de la valeur négociée de consigne du potentiel Valim.

En particulier, pour une valeur négociée de consigne du potentiel Valim donnée, le potentiel Vdac est choisi de manière que le potentiel Valim soit inférieur au seuil haut variable quand sa valeur est égale à la valeur négociée de consigne, et soit supérieur au seuil haut variable quand le potentiel Valim présente une surtension. On notera que, pour une valeur donnée de consigne du potentiel Valim, le choix de la valeur du potentiel Vdac, donc de l'amplitude d'une augmentation de la valeur du potentiel Valim par rapport à sa valeur de consigne à partir de laquelle on considère qu'une surtension est présente sur le potentiel Valim, est à la portée de l'homme du métier en fonction, par exemple, de la charge à alimenter du dispositif 400 et/ou de l'application ou du dispositif dans lequel est mis en oeuvre l'interface 414.

Ainsi, une fois qu'une valeur de consigne du potentiel Valim a été négociée, le potentiel Valim est comparé à un seuil haut variable pour détecter une surtension sur le potentiel Valim et pour commander une ouverture de l'interrupteur 309 lorsqu'une telle surtension est détectée.

En outre, chaque mise à jour de la valeur de consigne du potentiel Valim entraîne une mise à jour correspondante de la valeur du seuil haut auquel est comparé le potentiel Valim.

A titre d'exemple, la mise à jour de la valeur de consigne du potentiel Valim résulte de la mise en oeuvre d'une nouvelle phase de négociation d'une puissance d'alimentation.

A titre d'autre exemple, alors qu'une puissance d'alimentation a été négociée, lorsque l'interface 414, et plus généralement les dispositifs 200 et 400 (figure 1), fonctionnent en mode PPS, la valeur de consigne de potentiel Valim est mise à jour de manière périodique ou continue, par exemple en fonction d'une valeur mesurée du courant circulant entre les bornes 301 et 305 et de la valeur de consigne de la puissance d'alimentation négociée. Cela permet de conserver une valeur de consigne du potentiel Valim adaptée à la charge du dispositif 400.

Dans le fonctionnement de l'interface 414 décrit ci-dessus, le seuil auquel est comparé le potentiel Valim est fixe (constant) dans une première phase de fonctionnement, débutant par exemple à la connexion des dispositifs 200 et 400 entre eux et se terminant par exemple à la fin d'une première étape de négociation d'une puissance d'alimentation, et est variable dans une deuxième phase de fonctionnement, débutant par exemple à la fin de la première étape de négociation.

Dans une variante de réalisation, bien que cela ne soit pas représenté ici, la fermeture de l'interrupteur 309 peut en outre être conditionnée par le résultat d'une comparaison du potentiel Valim à un seuil bas. Dans ce cas, l'interrupteur 309 n'est à l'état fermé que si le potentiel Valim est compris entre les seuils haut et bas, et est maintenu à l'état ouvert sinon. Le seuil bas peut être fixe dans les première et deuxième phases de fonctionnement de l'interface 414, ou peut être fixe dans la première phase de fonctionnement et variable en fonction de la valeur de consigne du potentiel Valim dans la deuxième phase de fonctionnement de l'interface. Dans le cas où le seuil bas est fixe dans la première phase de fonctionnement de l'interface 414, et variable dans la deuxième phase de fonctionnement de l'interface 414, la mise en oeuvre du seuil bas et de la comparaison du potentiel Valim au seuil bas peuvent être mis en oeuvre de manière similaire à la mise en oeuvre décrite précédemment respectivement du seuil haut et de la comparaison du potentiel Valim au seuil haut.

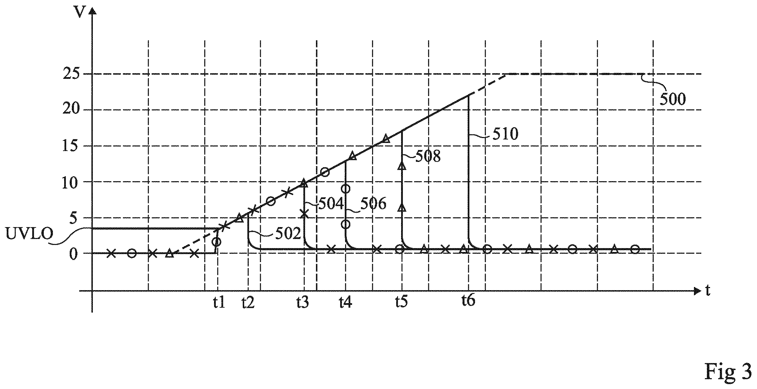

La figure 3 illustre par des courbes 500, 502, 504, 506, 508, 510 le fonctionnement de l'interface 414 selon un mode de réalisation.

Plus particulièrement, dans cet exemple de mise en oeuvre, la résistance R1 a une valeur égale à 100 kQ, la résistance R2 a une valeur égale à 6,2 kΩ, la résistance R3 a une valeur égale à 21 kΩ et le potentiel Vth est égal à 1,27 V. En outre, dans cet exemple, on considère que la puissance initiale d'alimentation correspond à une valeur initiale du potentiel Valim égale à 5,5 V. Par ailleurs, dans cet exemple, l'interface 414 met en oeuvre une comparaison du potentiel Valim à un seuil bas UVLO, ici égal à 3,5 V.

La courbe 500 correspond à une rampe de potentiel Valim croissant fournie à la borne 301. La courbe 502 illustre l'allure correspondante du potentiel fournit à la borne 3331 du circuit 333 dans le cas où l'interrupteur 329 et le convertisseur DAC seraient omis, ou, dit autrement, le cas où l'interrupteur 329 resterait toujours ouvert. Les courbes 504, 506, 508 et 510 illustrant les allures correspondantes du potentiel fournit à la borne 3331 du circuit 333 quand le potentiel Vdac est égal respectivement à 0,71 V, 0,52 V, 0,30 V et 0 V. Dit autrement, la courbe 502 illustre le cas où le potentiel Valim est comparée à un seuil haut de valeur fixe égale à 5,9 V, les courbes 504, 506, 508 et 510 illustrant les cas où le potentiel Valim est comparé à un seuil haut de valeur variable égale à respectivement à 10,3 V, 13,4 V, 17 V et 21,5 V.

En figure 3, tant que le potentiel Valim (courbe 500) n'est pas supérieur au seuil bas UVLO (instant t1), l'interrupteur 309 est ouvert et le potentiel Valim n'est pas transmis à la borne 3331 du circuit 333, le potentiel de cette borne étant alors nul (courbes 502, 504, 506, 508 et 510). A partir de l'instant t1, l'interrupteur 309 se ferme et le potentiel sur la borne 3331 du circuit 333 (courbes 502, 504, 506, 508 et 510) suit alors le potentiel Valim.

A un instant t2 postérieur à l'instant t1, le potentiel Valim devient supérieur à 5,9 V, d'où il résulte que, pour le cas de la courbe 502 (seuil statique), l'interrupteur 309 s'ouvre et le potentiel fourni à la borne 3331 du circuit 333 passe à une valeur nulle. Après l'instant t2, le potentiel Valim est supérieur à 5,9 V, d'où il résulte que, pour le cas de la courbe 502, l'interrupteur 309 reste ouvert et le potentiel sur la borne 3331 reste à une valeur nulle.

Pour les courbes 504, 506, 508 et 510, l'interrupteur 329 est commuté à l'état fermé entre l'instant t1 et l'instant t2, d'où il résulte que le potentiel est ensuite comparé à un seuil dynamique dont la valeur est fixée par le potentiel Vdac, en fonction de la valeur de consigne négociée du potentiel Valim.

A un instant t3 postérieur à l'instant t2, le potentiel Valim devient supérieur à 10,3 V, d'où il résulte que, pour le cas de la courbe 504, l'interrupteur 309 s'ouvre et le potentiel fourni à la borne 3331 du circuit 333 passe à une valeur nulle. Après l'instant t3, le potentiel Valim est supérieur à 10,3 V, d'où il résulte que, pour le cas de la courbe 504, l'interrupteur 309 reste ouvert et le potentiel sur la borne 3331 reste à une valeur nulle.

A un instant t4 postérieur à l'instant t3, le potentiel Valim devient supérieur à 13,4 V, d'où il résulte que, pour le cas de la courbe 506, l'interrupteur 309 s'ouvre et le potentiel fourni à la borne 3331 du circuit 333 passe à une valeur nulle. Après l'instant t4, le potentiel Valim est supérieur à 13,4 V, d'où il résulte que, pour le cas de la courbe 506, l'interrupteur 309 reste ouvert et le potentiel sur la borne 3331 reste à une valeur nulle.

A un instant t5 postérieur à l'instant t4, le potentiel Valim devient supérieur à 15,8 V, d'où il résulte que, pour le cas de la courbe 508, l'interrupteur 309 s'ouvre et le potentiel fourni à la borne 3331 du circuit 333 passe à une valeur nulle. Après l'instant t5, le potentiel Valim est supérieur à 15,8 V, d'où il résulte que, pour le cas de la courbe 508, l'interrupteur 309 reste ouvert et le potentiel sur la borne 3331 reste à une valeur nulle.

A un instant t6 postérieur à l'instant t5, le potentiel Valim devient supérieur à 21,5 V, d'où il résulte que, pour le cas de la courbe 510, l'interrupteur 309 s'ouvre et le potentiel fourni à la borne 3331 du circuit 333 passe à une valeur nulle. Après l'instant t6, le potentiel Valim est supérieur à 21,5 V, d'où il résulte que, pour le cas de la courbe 510, l'interrupteur 309 reste ouvert et le potentiel sur la borne 3331 reste à une valeur nulle.

Ainsi, on constate en figure 3 que l'interrupteur 309 est bien commuté à l'état ouvert dès que le potentiel Valim devient supérieur au seuil haut, que celui-ci soit fixe ou soit variable avec une valeur déterminée par la valeur de consigne négociée du potentiel Valim. L'ouverture de l'interrupteur 309 permet d'éviter qu'un potentiel Valim présentant une surtension soit transmis au circuit 333 et, plus généralement, à une charge du dispositif 400 (figure 1) qui pourrait être endommagée, voire détruite, par une telle surtension.

On aurait pu penser mettre en oeuvre la comparaison du potentiel Valim avec un seuil de valeur variable et déterminée par une valeur négociée de consigne du potentiel Valim en utilisant le microcontrôleur du circuit 331 et un convertisseur analogique numérique fournissant un signal numérique binaire représentatif d'une valeur du potentiel Valim. Toutefois, cela nécessiterait que le convertisseur analogique numérique fournisse de manière périodique un signal numérique représentatif du potentiel Valim et que le microcontrôleur compare, à chaque période, le signal de sortie du convertisseur analogique numérique à un seuil. Cela aurait entraîné une consommation plus élevée des ressources du microcontrôleur du circuit 331 par rapport au mode de réalisation décrit, cette consommation de ressources aurait été d'autant plus élevée que la période de fourniture du signal numérique représentatif du potentiel Valim est courte.

On aurait pu penser connecter l'interrupteur 329 à l'entrée du comparateur 323 qui n'est pas connectée au noeud 319 du pont diviseur 311, et prévoir un interrupteur entre la cathode de la diode 327 et cette entrée du comparateur. Ainsi, cette entrée du comparateur 325 aurait pu être reliée soit à la cathode de la diode 327, soit à la sortie du convertisseur DAC. Toutefois, le passage de la première phase de fonctionnement de l'interface 414 (seuil fixe) à la deuxième phase de fonctionnement (seuil variable) aurait alors posé problème. En effet, la sortie du convertisseur DAC aurait pu se retrouver reliée à la cathode de la diode 327 ce qui aurait pu entraîner une dégradation de la diode 327, ou aurait pu être flottante ce qui aurait pu provoquer des commutations intempestives de l'interrupteur 309.

Plus largement, on aurait pu penser à connecter la sortie du convertisseur DAC directement à la place de la diode 327 et prévoyant de commander le convertisseur DAC pour qu'il fournisse le potentiel Vdac à une valeur déterminée par la valeur du seuil haut auquel est comparé le potentiel Valim. Toutefois, le circuit 331 étant de préférence alimenté à partir du potentiel disponible sur la borne 3331, il aurait été impossible de commander le convertisseur DAC lors de la première phase où l'interrupteur 309 est ouvert, donc impossible de mettre en oeuvre la comparaison du potentiel Valim au seuil haut fixe. L'interrupteur 309 serait alors resté ouvert, et le convertisseur DAC serait resté sans alimentation électrique.

Bien que l'on ait décrit ci-dessus le cas d'une interface 414 où la fonction de négociation de puissance est mise en oeuvre par le circuit 331, on peut prévoir que l'interface comprenne un autre circuit configuré pour mettre en oeuvre une telle fonction. Cet autre circuit et le circuit 331 sont alors de préférence reliés ou connectés l'un à l'autre de manière que le circuit 331 obtienne une information représentative de la valeur de consigne négociée du potentiel Valim, et commande le convertisseur DAC et l'interrupteur 329 en conséquence.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Interface d'alimentation (414) comprenant :
un premier interrupteur (309) reliant une borne d'entrée (301) de l'interface à une borne de sortie (305) de l'interface ;
un pont diviseur (311) de tension reliant la borne d'entrée (301) à un noeud de référence (313) configuré pour recevoir un potentiel de référence (GND), le pont diviseur comprenant en outre un premier noeud (319) et un deuxième noeud (321) entre la borne d'entrée (301) et le noeud de référence (313);
un comparateur (323) dont une première entrée est connectée au premier noeud (319) du pont diviseur et dont une deuxième entrée est configurée pour recevoir un potentiel constant (Vth) ;
un convertisseur numérique analogique (DAC) ;
un deuxième interrupteur (329) reliant une sortie du convertisseur (DAC) au deuxième noeud (321) du pont diviseur (311) ; et
un premier circuit (331) configuré pour commander le deuxième interrupteur (329) et le convertisseur (DAC),
dans lequel une commande du premier interrupteur est déterminée par un signal de sortie (comp_sig) du comparateur (323).

2. Interface selon la revendication 1, dans lequel le pont diviseur (311) comprend au moins une première résistance (R1) reliant la borne d'entrée (301) au premier noeud (319), au moins une deuxième résistance (R2) reliant le premier noeud (319) au deuxième noeud (321) et au moins une troisième (R3) résistance reliant le deuxième noeud (321) au noeud de référence (313).

3. Interface selon la revendication 1 ou 2, dans laquelle la borne d'entrée (301) est configurée pour recevoir un premier potentiel (Valim), la borne de sortie (305) étant configurée pour recevoir un deuxième potentiel (Valim').

4. Interface selon la revendication 3, destinée à recevoir le premier potentiel (Valim) d'une source d'alimentation (201), et à fournir le deuxième potentiel (Valim') à une charge.

5. Interface selon la revendication 3 ou 4, dans laquelle le premier circuit (331) est en outre configuré pour négocier une valeur de consigne du premier potentiel (Valim), et pour commander le convertisseur (DAC) en fonction de la valeur de consigne négociée.

6. Interface selon la revendication 5, dans laquelle le premier circuit (331) est configuré pour commander une fermeture du deuxième interrupteur (329) après la négociation de ladite valeur de consigne.

7. Interface selon l'une quelconque des revendications 1 à 6, comprenant en outre un deuxième circuit (325) configuré pour fournir un signal de commande du premier interrupteur (309) à partir du signal de sortie (comp_sig) du comparateur.

8. Interface selon l'une quelconque des revendications 1 à 7, comprenant en outre un troisième circuit (333) dont une première borne (3331) est reliée à la borne d'entrée (301) par le premier interrupteur (309), et dont une deuxième borne (3332) est reliée à la borne de sortie (305), le troisième circuit (333) étant configuré pour fournir, à la deuxième borne (3332), un potentiel de la première borne (3331) dans un premier mode de fonctionnement ou un troisième potentiel dans un deuxième mode de fonctionnement.

9. Interface selon la revendication 8, dans lequel le premier circuit (331) est configuré pour sélectionner un mode de fonctionnement parmi les premier et deuxième modes de fonctionnement.

10. Interface selon la revendication 8 ou 9, dans lequel le troisième circuit (333) comprend un convertisseur de puissance configuré pour fournir le troisième potentiel à partir du potentiel de la première borne (3331).

11. Interface selon l'une quelconque des revendications 1 à 10, dans lequel le premier interrupteur (309) est un transistor MOS.

12. Interface selon l'une quelconque des revendications 1 à 11, dans lequel le deuxième interrupteur (329) est configuré pour être ouvert en l'absence de commande du premier circuit (331).

13. Interface selon l'une quelconque des revendications 1 à 12, dans lequel le deuxième interrupteur (329) est un transistor MOS, de préférence normalement bloqué.

14. Interface selon l'une quelconque des revendications 1 à 13, dans lequel le premier circuit (331) comprend, de préférence est constitué par, un microcontrôleur.

15. Procédé d'alimentation d'une charge à partir d'une source d'alimentation (201) comprenant les étapes suivantes :
recevoir un premier potentiel (Valim) de la source (201) ;
détecter avec un comparateur (323) que le premier potentiel (Valim) est inférieur à un seuil et conditionner une fermeture d'un premier interrupteur (309) reliant la source (201) à la charge à ladite détection ; et
négocier, avec la source (201), une valeur de consigne du premier potentiel (Valim),
dans lequel le seuil est fixe dans un premier mode de fonctionnement, et est déterminé par la valeur de consigne négociée dans un deuxième mode de fonctionnement, le procédé étant mis en oeuvre par une interface (414) selon l'une quelconque des revendications 1 à 14.

## Patentansprüche

1. Eine Stromversorgungsschnittstelle (414), die Folgendes aufweist:
einen ersten Schalter (309), der einen Eingangsanschluss (301) der Schnittstelle mit einem Ausgangsanschluss (305) der Schnittstelle verbindet;
eine Spannungsteilerbrücke (311), die den Eingangsanschluss (301) mit einem Referenzknoten (313) koppelt, der konfiguriert ist zum Empfangen eines Referenzpotenzials (GND), wobei die Teilerbrücke ferner einen ersten Knoten (319) und einen zweiten Knoten (321) zwischen dem Eingangsanschluss (301) und dem Referenzknoten (313) aufweist;
einen Komparator (323) mit einem ersten Eingang, der mit dem ersten Knoten (319) der Teilerbrücke verbunden ist, und mit einem zweiten Eingang, der konfiguriert ist zum Empfangen eines konstanten Potentials (Vth);
einen Digital-Analog-Wandler (DAC);
einen zweiten Schalter (329), der einen Ausgang des Wandlers (DAC) mit dem zweiten Knoten (321) der Teilerbrücke (311) verbindet; und
eine erste Schaltung (331), die konfiguriert ist zum Steuern des zweiten Schalters (329) und des Wandlers (DAC),
wobei eine Steuerung des ersten Schalters durch ein Ausgangssignal (comp_sig) des Komparators (323) bestimmt wird.

2. Schnittstelle nach Anspruch 1, wobei die Teilerbrücke (311) mindestens einen ersten Widerstand (R1) aufweist, der den Eingangsanschluss (301) mit dem ersten Knoten (319) koppelt, mindestens einen zweiten Widerstand (R2), der den ersten Knoten (319) mit dem zweiten Knoten (321) koppelt, und mindestens einen dritten Widerstand (R3), der den zweiten Knoten (321) mit dem Referenzknoten (313) koppelt.

3. Schnittstelle nach Anspruch 1 oder 2, wobei der Eingangsanschluss (301) konfiguriert ist zum Empfangen eines ersten Potenzials (Valim), und der Ausgangsanschluss (305) konfiguriert ist zum Empfangen eines zweiten Potenzials (Valim').

4. Schnittstelle nach Anspruch 3, die dazu bestimmt ist, das erste Potential (Valim) einer Stromquelle (201) zu empfangen und das zweite Potential (Valim') an eine Last abzugeben.

5. Schnittstelle nach Anspruch 3 oder 4, wobei die erste Schaltung (331) ferner konfiguriert ist zum Aushandeln eines Sollwerts des ersten Potenzials (Valim) und zum Steuern des Wandlers (DAC) gemäß dem ausgehandelten Sollwert.

6. Schnittstelle nach Anspruch 5, wobei die erste Schaltung (331) konfiguriert zum Steuern des Einschaltens des zweiten Schalters (329) nach dem Aushandeln des genannten Sollwerts.

7. Schnittstelle nach einem der Ansprüche 1 bis 6, ferner aufweisend eine zweite Schaltung (325), die konfiguriert ist zum Liefern eines Signals zur Steuerung des ersten Schalters (309) von dem Ausgangssignal (comp_sig) des Komparators.

8. Schnittstelle nach einem der Ansprüche 1 bis 7, ferner aufweisend eine dritte Schaltung (333) mit einem ersten Anschluss (3331), der über den ersten Schalter (309) mit dem Eingangsanschluss (301) gekoppelt ist, und mit einem zweiten Anschluss (3332), der mit dem Ausgangsanschluss (305) gekoppelt ist, wobei die dritte Schaltung (333) konfiguriert ist zum Liefern an den zweiten Anschluss (3332) eines Potenzials des ersten Anschlusses (3331) in einem ersten Betriebsmodus oder eines dritten Potenzials in einem zweiten Betriebsmodus.

9. Schnittstelle nach Anspruch 8, wobei die erste Schaltung (331) konfiguriert ist zum Auswählen eines Betriebsmodus zwischen dem ersten und dem zweiten Betriebsmodus.

10. Schnittstelle nach Anspruch 8 oder 9, wobei die dritte Schaltung (333) einen Leistungswandler aufweist, der konfiguriert ist zum Liefern des dritten Potenzials von dem Potenzial des ersten Anschlusses (3331).

11. Schnittstelle nach einem der Ansprüche 1 bis 10, wobei der erste Schalter (309) ein MOS-Transistor ist.

12. Schnittstelle nach einem der Ansprüche 1 bis 11, wobei der zweite Schalter (329) konfiguriert ist bei Abwesenheit einer Steuerung der ersten Schaltung (331) ausgeschaltet zu sein.

13. Schnittstelle nach einem der Ansprüche 1 bis 12, bei der der zweite Schalter (329) ein MOS-Transistor ist, der vorzugsweise im Normalzustand ausgeschaltet ist.

14. Schnittstelle nach einem der Ansprüche 1 bis 13, wobei die erste Schaltung (331) einen Mikrocontroller aufweist und vorzugsweise von diesem gebildet wird.

15. Verfahren zur Versorgung einer Last von einer Stromquelle (201), das die folgenden Schritte aufweist:
Empfangen eines ersten Potentials (Valim) der Quelle (201);
Detektieren mit einem Komparator (323), dass das erste Potential (Valim) niedriger als ein Schwellenwert ist, und Bewirken eines Einschaltens eines ersten Schalters (309), der die Quelle (201) mit der Last koppelt, ansprechend auf die Detektion; und
Aushandeln, mit der Quelle (201), eines Sollwertes des ersten Potentials (Valim),
wobei der Schwellenwert in einer ersten Betriebsart fest ist und in einer zweiten Betriebsart durch den ausgehandelten Sollwert bestimmt wird, wobei das Verfahren durch die Schnittstelle (414) nach einem der Ansprüche 1 bis 14 implementiert wird.

## Claims

1. A power supply interface (414) comprising:
a first switch (309) coupling an input terminal (301) of the interface to an output terminal (305) of the interface;
a voltage dividing bridge (311) coupling the input terminal (301) to a reference node (313) configured to receive a reference potential (GND), the dividing bridge further comprising a first node (319) and a second node (321) between the input terminal (301) and the reference node (313);
a comparator (323) having a first input connected to the first node (319) of the dividing bridge and having a second input configured to receive a constant potential (Vth);
a digital-to-analog converter (DAC);
a second switch (329) coupling an output of the converter (DAC) to the second node (321) of the dividing bridge (311); and
a first circuit (331) configured to control the second switch (329) and the converter (DAC),
wherein a control of the first switch is determined by an output signal (comp_sig) of the comparator (323).

2. The interface of claim 1, wherein the dividing bridge (311) comprises at least a first resistor (R1) coupling the input terminal (301) to the first node (319), at least one second resistor (R2) coupling the first node (319) to the second node (321), and at least one third resistor (R3) coupling the second node (321) to the reference node (313).

3. The interface of claim 1 or 2, wherein the input terminal (301) is configured to receive a first potential (Valim), the output terminal (305) being configured to receive a second potential (Valim').

4. The interface of claim 3, intended to receive the first potential (Valim) of a power source (201) and to deliver the second potential (Valim') to a load.

5. The interface of claim 3 or 4, wherein the first circuit (331) is further configured to negotiate a set point value of the first potential (Valim) and to control the converter (DAC) according to the negotiated set point value.

6. The interface of claim 5, wherein the first circuit (331) is configured to control a turning on of the second switch (329) after the negotiation of said set point value.

7. The interface of any of claims 1 to 6, further comprising a second circuit (325) configured to deliver a signal for controlling the first switch (309) from the output signal (comp_sig) of the comparator.

8. The interface of any of claims 1 to 7, further comprising a third circuit (333) having a first terminal (3331) coupled to the input terminal (301) by the first switch (309) and having a second terminal (3332) coupled to the output terminal (305), the third circuit (333) being configured to deliver, to the second terminal (3332), a potential of the first terminal (3331) in a first operating mode or a third potential in a second operating mode.

9. The interface of claim 8, wherein the first circuit (331) is configured to select an operating mode among the first and second operating modes.

10. The interface of claim 8 or 9, wherein the third circuit (333) comprises a power converter configured to deliver the third potential from the potential of the first terminal (3331) .

11. The interface of any of claims 1 to 10, wherein the first switch (309) is a MOS transistor.

12. The interface of any of claims 1 to 11, wherein the second switch (329) is configured to be off in the absence of a control of the first circuit (331).

13. The interface of any of claims 1 to 12, wherein the second switch (329) is a MOS transistor, preferably normally off.

14. The interface of any of claims 1 to 13, wherein the first circuit (331) comprises, preferably is formed by, a microcontroller.

15. A method of powering a load from a power source (201) comprising the steps of:
receiving a first potential (Valim) of the source (201);
detecting with a comparator (323) that the first potential (Valim) is lower than a threshold and conditioning a turning on of a first switch (309) coupling the source (201) to the load to said detection; and
negotiating, with the source (201), a set point value of the first potential (Valim),
wherein the threshold is fixed in a first operating mode, and is determined by the negotiated set point value in a second operating mode, the method being implemented by the interface (414) of any of claims 1 to 14.
